# EUROPEAN PATENT SPECIFICATION

(11) **EP 1 665 713 B1**
(45) Date of publication and mention of the grant of the patent: **03.01.2007**
(21) Application number: 04766445.3
(22) Date of filing: 06.08.2004
(51) Int. Cl.: H04L 29/06

(54) **DATA SHARING IN A MULTIMEDIA COMMUNICATION SYSTEM**
DATEN-SHARING IN EINEM MULTIMEDIA-KOMMUNIKATIONSSYSTEM
PARTAGE DE DONNEES DANS UN SYSTEME DE COMMUNICATION MULTIMEDIA

(30) Priority: 12.09.2003 GB 0321426
(43) Date of publication of application: 07.06.2006
(73) Proprietor: TELEFONAKTIEBOLAGET LM ERICSSON (publ), 164 83 Stockholm (SE)
(72) Inventor: PEISA, Janne, FIN-00180 Espoo (FI); SÅGFORS, Mats, FIN-02400 Kyrkslätt (FI); TORSNER, Johan, FIN-02600 Esbo (FI); WAGER, Stefan, FIN-02770 Esbo (FI)
(74) Representative: Lind, Robert
(86) International application number: PCT/EP2004/051741
(87) International publication number: WO 2005/027457

(56) References cited:
- WO-A-02/089000
- US-A1- 2003 014 477
- KELLY T: "Thin-client Web access patterns: Measurements from a cache-busting proxy" COMPUTER COMMUNICATIONS, ELSEVIER SCIENCE PUBLISHERS BV, AMSTERDAM, NL, vol. 25, no. 4, 1 March 2002 (2002-03-01), pages 357-366, XP004327033 ISSN: 0140-3664

## Description

### Field of the Invention

The present invention relates to combinational multimedia services and more particularly to a method of minimising traffic volume associated with such service.

### Background to the Invention

IP Multimedia (IPMM) services provide a dynamic combination of voice, video, messaging, data, etc. within the same session. By growing the numbers of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below.

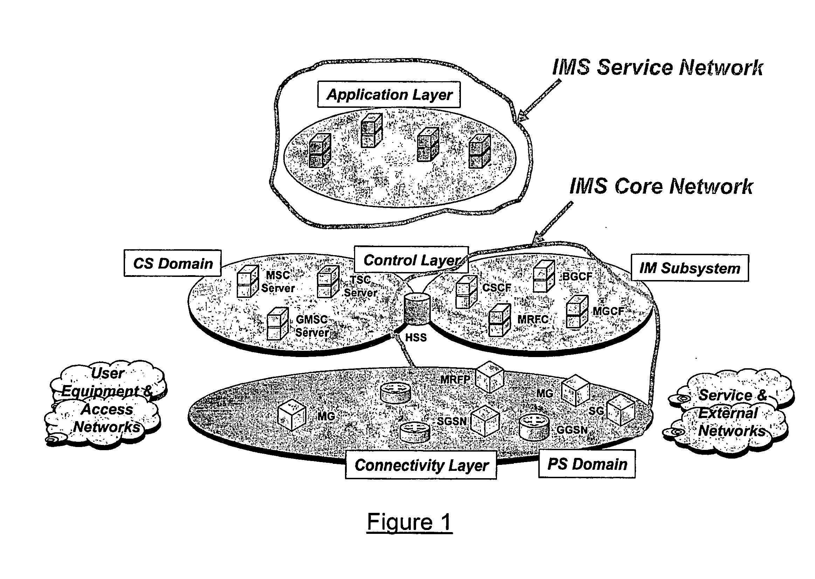

IP Multimedia Subsystem (IMS) is the technology defined (in TS 32.225, Release 5) by the Third Generation Partnership Project (3GPP) to provide IP Multimedia services over 3G mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) and Service Delivery Protocol (SDP) to set up and control calls or sessions between user terminals (or user terminals and web servers). IMS sits on top of an access network which might be a Universal Mobile Telecommunications System (UMTS) or a General Packet Radio Service (GPRS/GSM) network but which might use some alternative technology, e.g. WiFi. Figure 1 illustrates schematically how the IMS fits into the mobile network architecture in the case of a GPRS access network.

Push-to-Watch is a generic name given to an IP multimedia service which allows users to share pictures during a voice call. The service may be generalised to cover a combinational IP Multimedia service that includes and combines both a Circuit Switched media (such as voice) and a Packet Switched media over the IP Multimedia domain (such as pictures, video, presence, instant messages, etc.). This generalised service is referred to here as "WeShare". The service enables a user, during a Circuit Switched (CS) voice conversation with another user, to take a picture, a video or audio clip, etc. and to share this content with other users in (near) real time. Either party in the conversation may initiate transmission of content to the other party. The possibility of sharing a picture or other multimedia information will most likely result in longer phone calls, which will increase network operator revenues, even if the transmission of the actual media is free.

In the case of picture sharing, it is assumed that the parties to a WeShare service would like to be able to see the same picture at substantially the same time and that the time to transmit the picture between the parties should be minimised in order to ensure the best possible end-user experience. From the operator's point of view (especially if the transmission of the picture is cheap or free), the amount of data transmitted should be minimized in order to save network capacity for services with higher revenue per bit. Such minimization is known from the patent US 2003/0014477.

### Summary of the Invention

According to a first aspect of the present invention there is provided a method of optimising the use of transmission bandwidth in a communication system, the method comprising, for data to be sent via an interface from a first to a second node, generating a signature for the data content, sending the signature from the first to the second node or to an intermediate node in the transmission path, at the second node or said intermediate node comparing the signature to signatures for data stored at that node, and sending the data from the first to the second node, via the said interface, only if the received signature does not match a signature for stored data.

Said communication network may be a mobile wireless communication network, said interface being the air interface:

Said data may be multimedia data which is sent during a circuit switched voice call between the first and the second nodes.

Embodiments of the present invention may give rise to the following advantages:
Sending a signature instead of the complete file will result in a quicker transmission time and thus improved end user perceived quality.
Sending a signature instead of the complete file will result in less data transmission, resulting in increased system capacity.
Storing data at a proxy server if appropriate will allow the customisation of data, e.g. pictures, for various user devices using the cheap and fast processing power available at server.

In a first embodiment of the invention, said first and second nodes are user terminals, and said intermediate node is present and acts as a proxy server, caching data which is sent between user terminals for the first time. In the event that the received signature matches a signature for stored or cached data, the data is sent to the second node by the intermediate node.

In a second embodiment of the invention, said second node is a user terminal and said first node is a node at which content is stored. Said signature is generated at the first node, and is sent to the second node. Based upon the signature comparison, the second node is able to determine whether or not it has already received the data which is intended to be sent. If the data has already been sent, the further sending can be aborted.

### Brief Description of the Drawings

Figure 1 illustrates a mobile communication system comprising an IMS core network; and
Figure 2 illustrates signalling flows for the repeated sending of pictures (left) and for the sending of signatures in place of pictures (right).

### Detailed Description of Certain Embodiments

For the purpose of illustration, the following implementation of the invention is described in the context of a 3G cellular communications system in which network subscribers use mobile terminals such as is illustrated in Figure 1. The exchange of data, in this example pictures, is carried out between mobile terminals. The terminals may be "attached" to the same operator network or to different networks. The or each network is provided with a "proxy" server (e.g. within the IP Multimedia System, IMS).

According to the current Push-to-Watch proposals, pictures are stored on the sender's mobile device. They are either taken directly with the device (e.g. in the case of a camera phone) or are transmitted from some other device to the mobile device (e.g. from a digital camera to the phone). In both cases the picture will most likely then be sent unmodified from the sender's device to the receiver's device (via various network nodes). The receiver's device renders the received picture into a form suitable for display on the receiving device.

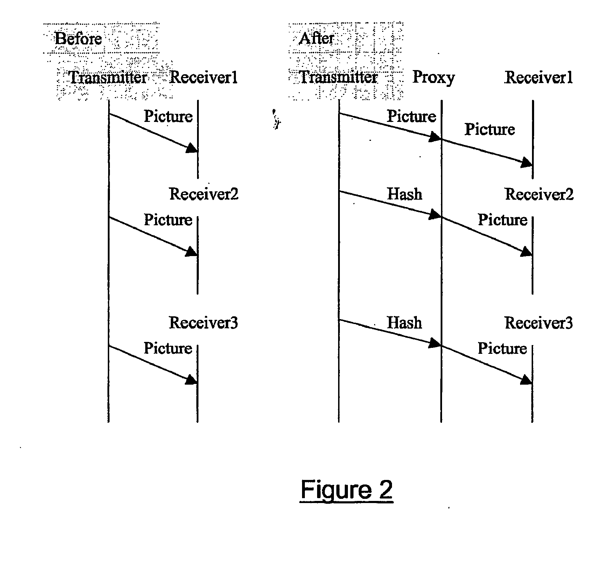

Often the picture that someone would like to share is special. It may be a unique moment in one's life (a picture of a new-born baby etc), or an especially entertaining picture (joke etc). It is likely that these kinds of pictures will be shared several times with different persons. If a picture is shared several times (as is illustrated in the left hand messaging flow of Figure 2), the transmission resources required for a single transmission are consumed several times over. For high resolution pictures the consumed resources can be significant (for example, a picture taken using a high quality digital camera can result in the need to transmit around a megabyte of data). Furthermore, if the picture needs to modified (e.g. the size or the number of the colours needs to be reduced) to better suite the display capabilities of the receiver, the required processing must be done either in the sending or receiving mobile terminal, which will result in the need for high computational effort at one of the terminals (resulting in turn in processing delays).

The problems identified above can be solved by using a proxy server to store already transmitted pictures in the network. The proxy will keep copies of sent pictures and avoids the need to transmit large files over the radio interface several times. Furthermore, the proxy server can be easily configured to have high computational power available, in which case the pictures can be easily adapted to the capabilities of various receiving terminals. Typically, the proxy will sit within the mobile operator's network and may be co-located with the MRFP

Example rules for the proxy operation are as follows:
1. All pictures transmitted across a network at least once are stored in the proxy server of that network for a predetermined time.
2. When a mobile terminal detects that the user is trying to share a picture with another party that has been shared before (with that or another party), the terminal will transmit a hash (or a check sum) of the file to the proxy server. The hash can be relatively small, of the order of tens of bytes.
3. Upon receiving the hash, the proxy server will replace the hash with the cached copy of the picture, and forward the message to the recipient.
4. If the proxy server does not have a cached copy of the picture, the proxy server will request the sender to transmit the original picture to the proxy server, where a copy is cached before forwarding the picture to the recipient.

This procedure is illustrated in the right hand messaging flow of Figure 2, with the left hand illustration demonstrating the prior art approach.

It can be expected that certain files (e.g. video clips of a football goal or a fun commercial) will be very popular amongst users and will potentially be transmitted to a given user during several calls with other different users. It may be difficult for users to know if a particular content has been downloaded before and is available on his or her phone or not, and potentially a user has to wait for/pay for a given content several times.

A solution to this problem is to calculate at the sending terminal a signature, e.g. checksum or content id, for a picture /video clip before it is transmitted. This may be computed from the image data itself, e.g. a hash of the data. Before sending the actual content, only the signature is transmitted, followed by the content if necessary. By checking the signature the user application at the receiver can check if the content has already been received and if it is available in the device. If so download of the file can be aborted.

Alternative solutions are possible:
1) The signature is calculated from the content in such a way that it does not include the file name, i.e. even if the file name is changed it will be recognised as a duplicate.
2) Instead of computing the signature from the image data itself, the signature may be data independent, being generated when the content is created (e.g. a random number). This solution may be less complex.

The invention also applies to normal internet mail where the same document or file can be received several times without the user knowing if it is already available or not.

## Claims

1. A method of optimising the use of transmission bandwidth in a communication system, the method comprising, for data to be sent via an interface from a first to a second node;
determining at said first node whether or not the data has been sent previously to said second node or another node;
if the data has been previously sent, generating a signature for the data content, sending the signature from the first to the second node or to an intermediate node in the transmission path, at the second node or said intermediate node comparing the signature to signatures for data stored at that node, and sending the data from the first to the second node, via said interface, only if the received signature does not match a signature for stored data; and
if the data has not been previously sent, sending the complete data to said second node.

2. A method according to claim 1, wherein said communication system is a mobile wireless communication network, and said interface is the air interface.

3. A method according to claim 1 or 2, wherein said data corresponds to a still or video image, or to an email.

4. A method according to any one of the preceding claims, wherein said first and second nodes are user terminals, and said intermediate node is present and acts as a proxy server, caching data which is sent between user terminals for the first time, and in the event that the received signature matches a signature for stored or cached data, the data is sent to the second node by the intermediate node

5. A method according to claim 1, 2 or 3, wherein said second node is a user terminal and said first node is a node at which content is stored, said signature being generated at the first node and being sent to the second node, wherein, based upon the signature comparison, the second node is able determine whether or not it has already received the data which is intended to be sent, and if the data has already been sent, the sending can be aborted.

6. A method according to claim 1 or 2, wherein said data is multimedia data which is sent during a circuit switched voice call between the first and the second nodes.

## Patentansprüche

1. Verfahren zur Optimierung der Nutzung der Übertragungsbandbreite in einem Kommunikationssystem, wobei das Verfahren für Daten, die über eine Schnittstelle von einem ersten an einen zweiten Knoten gesendet werden sollen, die folgenden Schritte umfasst:
Bestimmen im ersten Knoten, ob die Daten vorher an den zweiten Knoten oder einen anderen Knoten gesendet worden sind oder nicht;
wenn die Daten vorher gesendet worden sind, Erzeugen einer Signatur für den Dateninhalt, Senden der Signatur vom ersten an den zweiten Knoten oder an einen Zwischenknoten auf dem Übertragungsweg, im zweiten Knoten oder im Zwischenknoten erfolgendes Vergleichen der Signatur mit Signaturen für in diesem Knoten gespeicherte Daten und Senden der Daten vom ersten an den zweiten Knoten über die Schnittstelle nur dann, wenn die empfangene Signatur nicht mit einer Signatur für gespeicherte Daten übereinstimmt; und
wenn die Daten nicht vorher gesendet worden sind, Senden der kompletten Daten an den zweiten Knoten.

2. Verfahren nach Anspruch 1, wobei das Kommunikationssystem ein drahtloses Mobilfunk-Kommunikationsnetz ist und die Schnittstelle die Luftschnittstelle ist.

3. Verfahren nach Anspruch 1 oder 2, wobei die Daten einem Stand- oder Videobild oder einer E-Mail entsprechen.

4. Verfahren nach einem der vorhergehenden Ansprüche, wobei der erste und der zweite Knoten Teilnehmer-Endgeräte sind und der Zwischenknoten vorhanden ist und als ein Proxy-Server fungiert, wobei Daten, die zum ersten Mal zwischen Teilnehmer-Endgeräten gesendet werden, schnellzugriffsgerecht gespeichert werden und in dem Fall, wo die empfangene Signatur mit einer Signatur für gespeicherte oder schnellzugriffsgerecht gespeicherte Daten übereinstimmt, die Daten durch den Zwischenknoten an den zweiten Knoten gesendet werden.

5. Verfahren nach Anspruch 1, 2 oder 3, wobei der zweite Knoten ein Teilnehmer-Endgerät ist und der erste Knoten ein Knoten ist, in dem Inhalt gespeichert ist, wobei die Signatur im ersten Knoten erzeugt und an den zweiten Knoten gesendet wird, wobei der zweite Knoten auf der Grundlage des Signaturvergleichs imstande ist, zu bestimmen, ob er die Daten, die gesendet werden sollen, bereits empfangen hat oder nicht, und wenn die Daten bereits gesendet worden sind, das Senden abgebrochen werden kann.

6. Verfahren nach Anspruch 1 oder 2, wobei die Daten Multimedia-Daten sind, die während einer leitungsvermittelten Sprachverbindung zwischen dem ersten und dem zweiten Knoten gesendet werden.

## Revendications

1. Procédé d'optimisation de l'utilisation d'une bande passante de transmission dans un système de communication, le procédé comprenant, pour des données à envoyer via une interface depuis un premier noeud jusqu'à un second noeud:
la détermination au niveau dudit premier noeud de si oui ou non les données ont été envoyées au préalable jusqu'audit second noeud ou jusqu'à un autre noeud;
si les données ont été envoyées au préalable, la génération d'une signature pour le contenu de données, l'envoi de la signature depuis le premier noeud jusqu'au second noeud ou jusqu'à un noeud intermédiaire dans la voie de transmission, au niveau du second noeud ou dudit noeud intermédiaire, la comparaison de la signature avec des signatures pour des données stockées au niveau de ce noeud et l'envoi des données depuis le premier noeud jusqu'au second noeud, via ladite interface, seulement si la signature reçue ne correspond pas à une signature pour des données stockées; et
si les données n'ont pas été envoyées au préalable, l'envoi des données complètes jusqu'audit second noeud.

2. Procédé selon la revendication 1, dans lequel ledit système de communication est un réseau de communication sans fil mobile et ladite interface est l'interface hertzienne.

3. Procédé selon la revendication 1 ou 2, dans lequel lesdites données correspondent à une image fixe ou vidéo ou à un email.

4. Procédé selon l'une quelconque des revendications précédentes, dans lequel lesdits premier et second noeuds sont des terminaux d'utilisateur et ledit noeud intermédiaire est présent et joue le rôle de serveur proxy, qui met en cache des données qui sont envoyées entre des terminaux d'utilisateur pour la première fois et au cas où la signature reçue correspond à une signature pour des données stockées ou en cache, les données sont envoyées jusqu'au second noeud par le noeud intermédiaire.

5. Procédé selon la revendication 1, 2 ou 3, dans lequel ledit second noeud est un terminal d'utilisateur et ledit premier noeud est un noeud au niveau duquel un contenu est stocké, ladite signature étant générée au niveau du premier noeud et étant envoyée jusqu'au second noeud, dans lequel, sur la base de la comparaison de signatures, le second noeud peut déterminer si oui ou non il a déjà reçu les données qui sont destinées à être envoyées et si les données ont déjà été envoyées, l'envoi peut être abandonné.

6. Procédé selon la revendication 1 ou 2, dans lequel lesdites données sont des données multimédia qui sont envoyées pendant un appel vocal commuté par circuits entre les premier et second noeuds
